# EUROPÄISCHE PATENTSCHRIFT

(11) **EP 0 605 694 B1**
(45) Veröffentlichungstag und Bekanntmachung des Hinweises auf die Patenterteilung: **27.03.1996**
(21) Anmeldenummer: 93915622.0
(22) Anmeldetag: 28.07.1993
(51) Int. Cl.: C04B 35/00, B01J 13/00

(54) **VERFAHREN ZUR HERSTELLUNG KERAMISCHER GRÜNKÖRPER**
PROCESS FOR PRODUCING CERAMIC GREEN BODIES
PROCEDE DE FABRICATION D'EBAUCHES CERAMIQUES CRUES

(30) Priorität: 28.07.1992 CH 2377/92; 19.07.1993 CH 2179/93
(43) Veröffentlichungstag der Anmeldung: 13.07.1994
(73) Patentinhaber: GAUCKLER, Ludwig J., CH-8200 Schaffhausen (CH); GRAULE, Thomas, CH-8200 Schaffhausen (CH)
(72) Erfinder: GAUCKLER, Ludwig J., CH-8200 Schaffhausen (CH); GRAULE, Thomas, CH-8200 Schaffhausen (CH)
(74) Vertreter: Peege, Klaus
(86) Internationale Anmeldenummer: CH9300192
(87) Internationale Veröffentlichungsnummer: WO9402429

(56) Entgegenhaltungen:
- WO-A-87/06495
- US-A- 5 188 780
- DATABASE WPI Week 9122, Derwent Publications Ltd., London, GB; AN 91-161042 & JP,A,3 097 649 (TAKEDA) 23. April 1991
- PATENT ABSTRACTS OF JAPAN vol. 016, no. 509 21. Oktober 1992 & JP,A,04 187 300 (TOYO BAIO CORPORATION) 3. Juli 1992
- DATABASE WPI Week 9122, Derwent Publications Ltd., London, GB; AN 91-161042 & JP,A,3 097 649
- PATENT ABSTRACTS OF JAPAN vol. 016, no. 509 21. Oktober 1992 & JP,A,04 187 300

## Beschreibung

Die Erfindung betrifft ein Verfahren zur Herstellung keramischer Grünkörper nach dem Oberbegriff des Patentanspruches 1.

Zur Fertigung keramischer Griinkörper sind im wesentlichen fünf Formgebungsverfahren bekannt und zwar Pressen, Isopressen, Extrusion, Schlickerguss und Spritzguss. Die Wahl eines Formgebungsverfahrens richtet sich nach Gestalt, Funktion und Stückzahl des gewünschten Griinkörpers. Das Pressen und Isopressen geht von rieselfähigen, gut verpressbaren Ausgangspulvern aus. Die Extrusion, die sich vorzugsweise für achssymetrische Bauteile eignet, bedient sich eines Gemisches aus Pulvern und organischen oder anorganischen Plastifizierern. Fiir sehr komplex geformte Grünkörper wird das aus der Kunststofftechnologie bekannte Spritzgussverfahren verwendet. Bei diesem Verfahren wird ein Kernmikpulver/Thermoplast-Gemisch verspritzt und anschliessend werden nach der Formgebung das, oder die Thermoplaste, aus dem Grünkörper ausgetrieben. Beim Schlickerguss wird Keramikpulver mit Wasser unter Beihilfe von Tensiden und Bindern zu einem fliessfähigen Schlicker verarbeitet und anschliessend in poröse Formen gegossen. Durch Entzug des Wassers in den porösen Formen, z.B. aus Gips oder porösen Kunststoffen, entstehen Griinkörper, die nach der Entformung getrocknet und anschliessend gesintert werden.

Der Schlickerguss wird seit langem angewendet und vorzugsweise zur Herstellung grösserer und hohler Grünkörper verwendet. Der Schlickerguss ist trotz seiner weiten Verbreitung und Anwendung mit einigen Nachteilen behaftet. Der Aushärtmechanismus hängt vom Wasserentzug ah; lösliche Bestandteile neigen folglich zur Migration, mit dem Ergebnis ungleicher Verteilung im geformten Grünkörper.

Der Formgebungsprozess ist langsam, auch können sich Dichtegradienten im Griinkörper einstellen. Ferner ist ein nach dem bekannten Schlickergussverfahren hergestellter Grünkörper gegen mechanische Einwirkungen empfindlich und damit fiir eine Grünbearbeitung nur beschränkt geeignet. Auch sind die porösen Formen vor jedem Wiedereinsatz sehr sorgfältig und mit beträchtlichem Aufwand zu trocknen. Die Formen setzen der geometrischen Gestaltung von Grünkörpern Grenzen, indem z.B. Hinterschneidungen begrenzt möglich sind.

Ausgehend von dem bekannten Schlickerguss uhnd den ihm anhaftenden Nachteilen haben sich die Erfinder die Aufgabe gestellt, das Schlickerguss-Verfahren soweit weiterzuentwickeln, dass die bekannten Nachteile vermieden werden. Die Aufgabe wird erfindungsgemäss mit den kennzeichnenden Merkmalen des Patentanspruches 1 gelöst.

Bevorzugte Ausführungsformen des erfindungsgemässen Verfahrens sind in den auf den Anspruch 1 rückbezogenen Ansprüchen dargestellt.

Mit dem erfindungsgemässen Verfahren ist eine technisch einfache und in ihrer Durchführung schnelle und somit kostengünstige Alternative zu den bekannten Formgebungsverfahren geschaffen. Insbesondere bezüglich der Schlickerguss-Technik wurden Verbesseruuungen insofern erreicht, als geometrisch anspruchsvoller gestaltete Grünkörper als bisan möglich geformt werden können, welche bezüglich ihrer Gefüge, Oberflächenbeschaffenheiten und ihrer mechanischen Kennwerte alle an sie zu stellenden Anforderungen erfüllen. Da der Aushärtmechanismus bei dem erfindungsgemässen Schlickergussverfahren nicht mehr primär vom Wasserentzug abhängt, sind Migration und ungleichhe Verteilung löslicher Restandteile weitgehend unterdrückt. Der nach der Erfindung ablaufende Formgebungsprozess ist bedeutend schneller als der bekannte, auch ist die Entwicklung von Dichte-Gradienten vermeidbar. Im Gegensatz zu den nach dem bekannten Stand der Schlickergusstechnik hergestellten Grünkörpern sind nach dem erfindungsgemässen Verfahren gefertigte Grünkörper bei entsprechender Schlickerzusammensetzung zur Grünbearbeitung, beispielsweise zii einer mechanischen Nachbearheitung durch Drehen, Bohren, Fräsen oder Schleifen geeignet. Die Verwendung poröser Formen kann entfallen, sie werden erfindungsgemäss durch Formen alls nichtporösen Werkstoffen (Metalle, Kunststoffe) ersetzt, somit wird die aufwendige Trocknung vor jeder Wiederverwendung vermieden.

Zur Lösung der erfindungsgemässen Aufgabenstellung geht die Erfindung davon aus, dass oxidische, oder mit einer Oxidschicht überzogene nichtoxidische, Pulverteilchen in Wasser verschiedene Oberflächenreaktionen eingehen, deren Art oder Typ vom ph-Wert (potentialbestimmende Ionen: H⁺ und OH⁻) des Wassers abhängt. Es reswultiert eine Aufladung der Piilverteilchen, die für den sauren Bereich positiv, fiir den basischen Rereich negativ ist. Die elektrostatische Aufladung (das Potential der Pulverteilchen, im sauren wie im basischen Bereich, bestimmt die Viskosität eines Schlickers. Dabei gilt, dass je höher der Absolutbetrag des Potentials ist, desto niedriger die Viskosität Rind umso besser ist die Giessbarkeit des Schlickers. Zwischen basischem und saurem Bereich liegt eiii Punkt - isoelektrischer Punkt, oder IEP genannt -, an dem Pulverteilchen ungeladen vorliegen; der Absolutbetrag des Aufladungspotentiales ist praktisch Null, die Viskosität sehr hoch, der Schlicker ist nicht giessbar, d.h. er ist praktisch fest. Im Gegensatz zum Stand der Technik, der zur Bildung eines Grünkörpers vergossenem Schlicker Wasser entzieht, zielt die Erfindung dahin, Schlicker nach dessen Verguss durch Abbau von Aufladungspotentialen zur Verfestigung, d.h. zum IEP zu führen.

Der Abbau von Aufladungspotentialen könnte nun je nachdem, ob aus dem sauren oder basischen Bereich auf den IEP zugegangen wird, durch eine sogenannte externe pH-Verschiebung, d.h. durch Zusatz einer Säure oder Base zum Schlicker, erfolgen. Diese Art einer Verfahrensführung ist jedoch aus technischen Gründen während der Formgebung (nach Schlickerherstellung und Verguss) nicht durchführbar. Säure und/oder Base müssten von aussen der Suspension zugeführt werden, was die Lage der Piilverteilchen zueinander empfindlich stören und zu unbrauchbaren Griinkörpern führen würde. In Ueberwindung dieses Hindernisses wird gemäss der Erfindung vorgeschlagen, dem Schlicker bei seiner Herstellung und vor seinem Verguss einen Wirkstoff beizugeben, der den Ladungszustand des Schlickers (der Schlickerteilchen) bis zu dessen Verfestigung verändert.

Zur Anwendung kommen bevorzugt Wirkstoffe - auch Substrate genannt - die sich im Schlicker selbst zersetzen, wobei die anfallenden Zersetzungsprodukte den pH-Wert des Schlickers bis zu dessen Verfestigung zum IEP verschieben (interne pH-Verschiebung). Diese Verschiebung kann gemäss der Erfindung aus dem sauren oder basischen Bereich erfolgen. Als Wirkstoffe kommen gemäss der Erfindung einmal Wirkstoffe in Form organischer Moleküle in Betracht.

Als zweckmässig erwiesen haben sich als Wirkstoffe organische Moleküle in Form von Harnstoff, Carbonsäureester, beispielsweise Ester der Essigsäure, abbaubare Kohlehydrate, Ester des Glyzerins, oder Carbonsäureamide einzeln oder in Mischung. Soll einem Schlicker eine Mischung aus einem Enzym und Substrat oben erwähnter Art zugemischt werden - zur Reeinflussung des Schlickerverfestigungsverhaltens können Enzym und Substrat auch getrennt zugemischt werden - so sind als Enzyme Hydrolasen, z.B. Urease, Carboxyl-Esterase, Acetylesterase, Pektinesterase, Acylase, Lipase oder Oxydasen, z.B. Glukoseoxydase erfindungsgemäss bevorzugt. Bei dieser Ausführungsform des erfindungsgemässen Verfahrens sind die Enzyme dazu bestimmt, die Wirkstoffe je nach ihrer Art zu einer Säure oder Base und zu einem Restmolekül umzuwandeln, wobei die Säure (oder Base) ein im Schlicker entstandenes Reaktionsprodukt ist.

Ist eine Selbstzersetzung der Wirkstoffe im Schlicker - also ohne Hilfe von Enyzmen als Zersetzern - erwünscht, so haben sich dazu Wirkstoffe wie beispielsweise Glyzerintriester, Glycerindiester, oder Gluconsäurelacton als besonders zweckmässig erwiesen.

Die mit vorstehenden Mitteln ausgelöste pH-Wertverschiebung wird erfindungsgemäss auch dazu benutzt, die Koagulationsfestigkeit des Grünkörpers zu erhöhen und die Koagulationsdauer (Verfestigungsdauer) zu senken. Dazu wird die pH-Wertverschiebung zur Steuerung der pH-sensitiven Vernetzung von Polymeren oder die ionenabhängige Vernetzung anderer Polymere verwendet. Speziell modifizierte Polyacrylatemulsionen zeigen bei pH-Werten um 4 keine Verdickung, während sie sich bei einer pH-Wertveränderung nach pH 8-9 infolge interner Vernetznung verfestigen. Die Kombination dieser Verfestigungsreaktion mit der pH-Wert abhängigen Entladung eines sauren Keramikschlickers (durch ureasekatalysierte Zersetzung von Harnstoff) führt zu einem Synergieeffekt, die Koagulationsfestigkeit nach beendeter Koagulierung steigt damit um das 5 bis 10-fache des Wertes ohne besagte Kombination. Mit der hohen Koagulationsfestigkeit einhergehend ist eine wesentlich verbesserte Entformbarkeit des Grünkörpers im nassen, nicht getrockneten Zustand. Vom basischen Bereich her kommend ist der gleiche Effekt der Erhöhung der Koagulationsfestigkeit einerseits durch Einsatz spezieller Sole (z.B. SiO2-Sol, ein feinstteiliges Kolloid mit Teilchengrössen von 1 bis 20 nm); Ludox, DuPont) und der Koagulation dieses Sols durch Erhöhung der Ionenstärke möglich. Einsetzbar für den gleichen Zweck sind aber auch Kolloidsysteme auf der Basis von Biopolymeren, die wie z.B. Carrageenan-Lösungen bei (interner) Zugabe von Ionen (z.B. Ammonium- oder Calcium-Ionen) verdicken, wobei die Ionen nicht primär den Ladungszustand verändern, sondern als Bindemittel zwischen funktionellen Gruppen, z.B. Carboxylgruppen, wirken.

Eine weitere Erhöhung der Koagiulationsfestigkeit ist aber auch durch den Einsatz speziell veresterter Polymeren möglich. Derartige Polymere zeigen in verestertem Zustand niedrige Viskosität. Durch die Hydrolyse des Esters werden die zuvor inaktiven Caboxylgruppen zur intermolekularen Wechselwirkung fähig, eine Verfestigung des Binders durch Brückenbildung zwischen mehreren Makromolekülen wird damit ermöglicht.

Diese zuvor beschriebene Esterhydrolyse kann nun einerseits basenkatalysiert im stark alkalischen Milieu oder auch bei Einsatz esterhydrolysierender Enzyme (Esterasen) im schwach alkalischen Milieu erfolgen.

Durch Temperatiurerhöhung um 10 - 20°C kann die Koagulationszeit um einen Faktor 2 - 4 verringert werden.

Zu der Erfindung gehört auch, anstelle des Zufahrens auf den IEP entweder aus dem sauren oder basischen Bereich entlang einer feststoffspezifischen (beispielsweise AL2 O3) ortsfesten Zetapotentialkurve, wie vorstehend beschrieben, ganze schlickerzusammensetzungsspezifische Zetapotentialkurven im Zetapotential-Diagramm durch Zusatz von Säuren oder Basen (durch Säuren aus dem basischen Bereich in den sauren oder durch Basen von sauren in den basischen Bereich) zu verschieben, um von einem beliebigen Punkt der verschobenen Zetapotentialkiirven im wesentlichen ordinatenparallel auf einen auf der Abzisse eines Zetapotentialdiagrammes liegenden Punkt (IEP) mit dem Effekt der Verfestigung des vorher verflüssigten Schlickers zu fahren. Die Verschiebung einer Zetapotentialkurve aus dem basischen in den sauren Bereich oder umgekehrt mit entsprechender Veränderung - im ersteren Fall Verkleinerung des IEP - wird gemäss der Erfindung dann gewählt, wenn Schlicker mit so hohen Feststoffgehalten zu vergiessen sind, die bei nicht verschobenen Zetapotentialkurven fest wären.

Zur Durchführung dieser Ausführungsform des erfindungsgemässen Verfahrens wird im Falle der Verschiebung der Zetapotentialkurve vom basischen in den sauren Bereich dem Schlicker mit hohem Feststoffanteil zunächst ein organischer Verflüssiger beigemischt, der ansonsten nicht giessbare Schlicker wird damit giessbar. Zur Verfestigung des so giessbar gemachten Schlickers ist dem Schlicker ein den Verfliissiger wieder abbauendes, oxidierendes Reagens beizugeben. Zur Verschiebung in den sauren Bereich kommt als organischer Verflüssiger erfindungsgemäss bevorzugt 2, 3, 4-Trihydroxybenzoesäure in Betracht, wobei zu deren Abbau sich als oxidierendes Reagens Wasserstoffperoxid als zweckmässig erwiesen hat.

Eine vergleichbare Wirkung zur Verschiebung einer Zetapotentialkurve vom basischen in den sauren Bereich wird erreicht, wenn einem Schlicker mit hohem Feststoffanteil als organischer Verflüssiger 4,5-Dihydroxy- 1,3-Benzoldisulfonsäure Rind ein, den organischen Verflüssiger abbauendes Enzym, vorzugsweise Catecholoxidase zugemischt wird.

Ist eine Zetapotentialkurve zur Vergiessung eines auf dieser Kurve festen Schlickers vom sauren in den basischen Bereich zu verschieben, so sind dem Schlicker gemäss der Erfindung nicht als Verflüssiger wirkende organische Moleküle beizugeben, die vermittels beizumischender Enzyme zu wirksamen Verflüssigern verändert werden.

Bevorzugt nach der Erfindung kommen nicht als Verflüssiger wirkende organische Molekiile (als Verflüssiger des hochfeststoffhaltigen Schlickers inert wirkende organische Moleküle), die durch Umsetzung vermittels Enzymen zu als Verflüssiger wirkende organische Moleküle veränderbar sind, Derivate der Acetylsalicylsäure oder Vorstufen der Zitronen- oder Weinsäure als Wirkstoffe dieser in Verbindung mit bzw. unter Beimischung von Acrylester-Hydrolase, als ein bevorzugtes Enyzm in Betracht.

Im Folgenden wird die Erfindung an Hand der Beispiele näher dargestellt.

### Beispeil 1

Ein saurer Giessschlicker wurde durch Zugahe von 536 g Aluminiumoxid-Pulver (HPA 0.5 mit 0,05 Gew. % Mgo; Ceralox Corporation, USA) zu einer Lösung von 1,4 g konz. Salzsäure und 3,0 g Harnstoff in 97,0 g deionisiertem Wasser hergestellt. Der nach Ultraschallbehandlung desagglomerierte, dünnflüssige Schlicker wies einen pH-Wert auf von 4 - 4.5 und wurde anschliessend unter Vakuum entgast. Zu diesem Zeitpunkt hat der Schlicker typischerweise eine Viskosität von 100 - 300 mPas.

Zu diesem aufbereiteten Schlicker wurden zwecks Verschiebung des pH-Wertes in Richtung des IEP (also in den basischen Bereich) entlang der Zetapotentialkurve 500 - 1000 Units Urease (EC 3.5.1.5) in Form einer wässrigen Lösung mit 2000 Units/ml Urease zugegeben. Nach Homogenisierung des nun giessbereiten Schlickers erfolgte der Abguss in Kunststoff- oder Metallformen. Je nach Reaktionsbedingungen verfestigte sich der Schlicker nach 30 Minuten bis 3 Stunden. Zusätzliches Trocknen erhöhte die Festigkeit der erhaltenen Grünkörper. Die Entformung erfolgte wenige Stunden nach erfolgtem Giessprozess im feuchten oder vorgetrockneten Zustand. Die getrockneten Griinkörper sind durch hohe Gründichten von 58 - 62 % (je nach Feststoffgehalt im Schlicker) und ausgezeichnetes Sinterverhalten charakterisiert.

### Beispiel 2

Ein basischer Giessschlicker wurde durch Zugabe von 425 g Aluminiumoxid-Pulver (HPA 0.5; Ceralox Corporation) zu einer Mischung von 0,85 g Citronensäure, 4,5 g Essigsäureethylester, 1,0 ml konz. Ammoniakwasser (25 %) und 73,0 g deionisiertem Wasser hergestellt. Sein isoelektrischer Punkt, liegt nun bei pH = 4 - 4.5. Nach Desagglomerierung und Entgasen hatte der aufbereilete Giessschlicker typischerweise eine Viskosität von 50 - 200 mPas und einen pH-Wert von pH = 9 bis 10.

Zu dem Schlicker wurden 100 - 200 Units Esterase (EC 3.1.1.1) in Form einer wässrigen Ammoniumsulfat-Lösung zugegeben. Dies bewirkt nach dem Vergiessen der Suspension eine Verschiebung des pH-Wertes vom basischen Bereich in Richtung des sauren Bereiches entlang der Zetapotentialkurve bis zum IEP. Nach Abgiessen in Metall- oder Kunststoff-Formen erfolgte die Verfestigung je nach Reaktionsbedingungen in 1- 3 Stunden. Die getrockneten Grünkörper zeichnen sich durch hohe Gründichten von 60 - 62 % und ausgezeichnetes Sinterverhalten aus.

### Beispiel 3

Ein basischer Giessschlicker mit pH = 9 - 9.5 wurde durcti Zugabe von 436 g Siliciumcarbid-Pulver (Norton 10 LXC) zu einer Lösung von 0,5 g konz. Ammoniakwasser (25 %) und 3,5 g Glucose in 100 ml deionisiertem Wasser hergestellt. Nach Desagglomerierung und Entgasen besass der aufbereitete Schlicker typischerweise eine Viskosität von 500 - 1000 mPas. Zu diesem giessfertigen Schlicker wurden 2000 Units Glucoseoxidase (EC 1.1.3.4) in Form einer Lösung mit 1500 Units/ml Enzym gegeben. Nach Abgiessen in Metall- oder Kunststoff-Formen erfolgte die Verfestigung durch Verschiebung des pH-Wertes der Suspension aus dem basischen in Richtung des sauren Bereiches bis zum IEP je nach Reaktionsbedingungen in 30 Minuten bis 2 Stunden. Die getrockneten Grünkörper haben Gründichten von 58 - 60 %.

### Bespiel 4

Eiii basischer Giessschlicker mit pH = 10 wurde durch Zugabe von 260 g Aluminiumoxid-Pulver (HPA 0.5; Ceralox Corporation) zu einer Mischung von 0,20 g Tiron (4,5-Dihydroxy-1,3-Benzoldisulfonsäure) und 0,5 ml konz. Ammoniakwasser (25%ig) in 49,0 g deionisiertem Wasser hergestellt. Nach Desagglomerierung und Entgasung wurden dem dünnflüssigen Schlicker mit einer Viskosität von typischerweise 50 - 100 mPas unter Mischen im Vakuum 1,0 ml Triacetin (Glyceryltriacetat) zugesetzt. Nach Abgiessen in Metall- oder Kunststoff-Formen erfolgte die Verfestigung durch Verschiebung des pH-Wetes der Suspension vom basischen in den sauren Bereich bis zum IEP in 15-30 Minuten. Gründichten von 58 - 60 % werden erreicht.

### Beispiel 5

Ein basischer Giessschlicker wurde durch Zugabe von 260 g Aluminiumoxid-Pulver (HPA 0.5; Ceralox Corporation, USA) zu einer Lösung von 0.20 g 2,3,4 -Trihydroxybenzoesäure und 0,30 ml konz. Ammoniakwasser (25 %) in 50,0 g deion. Wasser mit pH = 10 - 11 hergestellt. Nach Desagglomerierung und Entgasung wurden dem dünnflüsssigen Schlicker (Viskosität ca, 500 mPas) 0,5 ml Wasserstoffperoxid (30 %) zugegeben. Nach Abgiessen in Metall oder Kunststoff-Formen erfolgte die Verfestigung durch Verschiebung des IEPs vom neutralen in den basischen Bereich Rind gleichzeitiger Verschiebung des pH-Wertes entlang der geänderten Zetapotentialkurve in Richtung des IEPs in 1 - 2 Stunden. Die Grünkörper zeichnen sich durch einen besonders niedrigen Anteil an organischen Additiven (<0,1 Gew. %) und Gründichten von 58 - 60% aus.

### Beispiel 6

Ein basischer Giessschlicker wurde durch Zugabe von 260 g Aluminiumoxid-Pulver (HPA 0.5, Ceralox Corporation, USA) zu einer Lösung von 0,60 g Tiron (1,5-Dihydroxy-1,3-Benzoldisulfonsäure) und 1,3 ml Ammoniakwasser (25 %) in 50 ml deionisiertem Wasser hergestellt. Er weist einen pH-Wert von 9 - 10 auf. Nach Desagglomerierung und Entgasung wurden dem dünnflüssigen Schlicker (Viskosität ca 100 - 500 mPas) 500 Units Catecholoxidase (EC 1.14.18.1) in Form einer Lösung mit 100 U/ml Enzym zugegeben. Nach Abgiessen in Metall- oder Kunststoff-Formen erfolgte die Verfestigung in 1 - 3 Stunden durch Verschiebung der Zetapotentialkurve verursacht durch den Abbau des vorgänglich zugegebenen Verflüssigers (Tiron) durch die Reaktion des Tirons mit der Catecholoxidase. Die Grünkörper zeichnen sich durch einen besonders niedrigen Anteil an organischen Additiven (<0,5 Gew. %) und hohe Griindichten von 58 - 60 Vol. % aus.

### Beispiel 7

Ein saurer Giessschlicker (pH - 5 - 6) wurde durch Zugabe von 280 g Aluminiumoxid-Pulver (HPA 0.5; Ceralox Corporation, USA) zu einer Lösung von 0,60 g 2-Carboxyacetylsalicylsäuure in 50 ml deionisiertem Wasser hergestellt. Nach Desagglomerierung und Entgasung wurde dem Schlicker 500 Units Arylester-Hydrolase (EC 3.1.1.2) in 0,5 ml deionisertem Wasser zugegeben, Nach Abgiessen in Metall- oder Kunststoff-Formen erfolgt die Verfestigung in 2 - 4 Stunden durch Verschiebung des IEPs aus dem basischen in den sauren Bereich aufgrund der Bildung eines wirksamen Verfüssigers Salicylsäure. Gründichten von 60 - 62% wurden damit erreicht.

### Beispiel 8

Ein basischer Giessschlicker (pH = 9 - 10) wurde durch Zugabe von 400 g Aluminiumoxid-Pulver (RCHP DBM; Reynolds, USA) zu einer Mischung von 0,80 g Citronensäure, 5,0 g Essigsäureethylester, 1,0 ml konz. Ammoniakwasser und 75,0 g deionisiertem Wasser hergestellt. Nach Desagglomerierung wurden zu diesem Schlicker 80,0 g tetragonal stabilisiertes Zirkonoxid (SY Ultra 5.2; ICI Z-Tech, Grossbritannien) in einer Mischung von 0,16 g Citronensäure und 0,15 ml konz. Ammoniakwasser in 20,0 g deionisiertem Wasser (pH = 9 - 10) gegeben. Nach nochmaligem Desagglomerieren und Entgasen wurden dem Schlicker 500 Units Esterase (EC 3.1.1.1) in Form einer wässrigen Ammoniumsulfat-Lösung zugegeben. Nach Abgiessen in Metall- oder Kunststoff-Formen erfolgte die Verfestigung in 15 - 30 Minuten aufgrund der Verschiebung des pH-Wertes der Suspension vom basischen in den sauren Bereich bis zum IEP. Dichten von 55 - 62% wurden so erreicht.

### Beispiel 9

Ein basischer Giesschlicker mit pH = 9 - 9.5 wurde durch Zugabe von 350 g Zirkonoxid (PSZ mit 6 mol % Y203 der Fa. Rhone-Poulenc, Frankreich) zu einer Lösung von 1,75 g Essigsäureethylester und 1,4 ml Ammoniumpolyacrylat-Lösung (Darvan C, Vanderbilt, USA) in 49 ml deionisiertem Wasser gegeben. Nach Desagglomerierung Rind Entgasung wurden dem dünnflüssigen Schlicker (Viskosität ca. 500 mPas) 500 Units Esterase (EC 3.1.1.1) in Form einer Lösung mit 2000 u/ml Enzym zugegeben. Nach Abgiessen in Metall- oder Kunststoff-Formen erfolgte die Verfestigung in 2 - 3 Stunden durch Verschiebung des pH-Wertes aus den basischen in Richtung des sauren Bereiches bis zum IEP. Die Grünkörper zeichen sich durch Gründichten von ca. 55 Vol % aus.

### Beispiel 10

Ein saurer Giessschlicker wurde durch Zugabe von 797 g Aluminiumoxid (A 17 NE, Alcoa, BRD) zu einer Lösung von 1,60 g konz. Salzsäure und 3,0 Harnstoff in 77,1 g deionisiertem Wasser hergestellt. Der Schlicker weist zu diesem Zeitpunkt einen pH von 4,5 bis 5 auf. Nach Zugabe von 3,0 ml Binderlösung (Acusol 820, Fa. Rohm und Haas, BRD oder Rohagit, SD 15, Fa. Röhm. BRD) besitzt die Suspension bei einem pH von 4 - 4,5 eine Viskosität von 100 - 500 mPa s.

Zu diesem aufbereiteten Schlicker werden nach Desagglomerierung und Entgasen 910 units Urease in Form einer wässrigen Lösung mit 2000 U/ml zugegeben. Nach Abguss in Metall- oder Kunststofformen erfolgt die Verfestigung in 30 - 60 Minuhten.

Die koagulierten, nicht getrockneten Grünkörper zeichnen sich durch hohe Koagulationsfestigkeit und damit leichte Entformbarkeit im nassen Zustand aus.

### Beispiel 11

Ein basischer Giessschlicker mit pH 11 wurde durch Zugabe von 673 g Siliciumnitrid (LC 10, Starck, BRD) zu einer Lösung von 40 g Ludox TM (Du Pont, USA), 10,0 g Tetramethylammoniumhydroxid-Lösung und 10,0 g Harnstoff in 160.0 g deionisiertem Wasser hergestellt. Nach Desagglomerierung Rind Entgasen wurden dem Schlicker 1500 units Urease (als Pulver) und 0,20 g Glycerintriacetat zugesetzt. Nach dem Abguss in Metall- oder Kunststofformen erfolgte die Verfestigung in 30 bis 60 Minuten. Die Gründichte beträgt 50 - 55 %.

### Beispiel 12

Ein basischer Giessschlicker mit pH 11-12 wurde durch Zugabe von 673 g Siliciumnitrid (LC 10, Starck, BRD) zu einer Lösung von 0,80 g Carrageenan, 2,0 g 1,6-Diaminohexan, 5,0 g Tetramethylammoniumhydroxid-Lösung und 10,0 g Harnstoff in 160.0 g deionisiertem Wasser hergestellt. Nach Desagglomerierung und Entgasen wurden dem Schlicker 2000 units Urease (als Pulver) und 0,20 g Glycerintriacetat zugesetzt. Nach dem Abguss in Metall- oder Kunststofformen erfolgte die Verfestigung in 15 bis 30 Minuten. Die Gründichte beträgt 50 - 55 %.

### Beispiel 13

Ein basischer Giessschlicker mit pH 12-13 wurde durch Zugabe von 660 g Siliciumnitrid (LC 10, Starck, BRD) zu einer Lösung von 2,5 g 1,6-Diaminohexan, 6,0 g Tetramethylammoniumhydroxid-Lösung und 10, g Harnstoff in 155 g deionisiertem Wasser hergestellt. Nach Desagglomerierung und Entgasen wurden dem Schlicker 500 units Urease (als Pulver) und 0,20 g Glycerintriacetat sowie 2,0 g hydrolysierbares Polymer zugesetzt. Nach dem Abguss in Metall- oder Kunststofformen erfolgte die Verfestigung in 30 bis 60 Minuten dtirch Hydrolyse des veresterten Polymers und gleichzeitiger Entladung durch pH-Wert-Verschiebung Richtung sauer.

### Beispiel 14

Ein basischer Giessschlicker mit pH 11-12 wurde durch Zugabe von 660 g Siliciumnitrid (LC 10, Starck, BRD) zu einer Lösung von 2,5 g 1,6-Diaminohexan, 4,0 g Tetramethylammoniumhydroxid-Lösung und 10, g Harnstoff in 155 g deionisiertem Wasser hergestellt. Nach Desagglomerierung und Entgasen wurden dem Schlicker 500 units Urease (als Pulver) und 0,20 g Glycerintriacetat sowie 2,0 g hydrolysierbares Polymer Rind ausserdem 2000 units eines esterspaltenden Enzyms zugesetzt. Nach dem Abguss in Metall- oder Kunststofformen erfolgte die Verfestigung in 30 bis 60 Minuten durch Hydrolyse des veresterten Polymers und gleichzeitiger Entladung durch pH-Wert-Verschiebung Richtung sauer.

Die Beispiele stellen auf Al₂O3, SiC, ZrO₂ und Al₂O3/ZrO₂-Composites als keramische Materialien ab. Darauf ist die Erfindung jedoch nicht beschränkt. Sie ist auch auf alle anderen Arten monolitischer keramik, wie ZrO2 (TZP, PSZ, FSZ), SiC, Si3N4, BaTiO3, TiO2, Mullit, MgO, Kaolin, B4C, TiB2, BN, SiO2, wie auch mit sogenannten Composites, wie beispielsweise faserverstärkten Keramiken wie AL203/SiC SiC/C oder partikelverstärkten Keramiken wie Al2 O3/Zr O2 (ZTA) und Al2 O3/TiB2 anwendbar. Ferner zeichnen sich Mischungen nach den vorstehenden Beispielen und den nachfolgenden Ansprüchen dadurch aus, dass die mit den Additiven in den Mischungen eingeleiteten Reaktionenn bei Raumtemperatur (15°C bis 30°C) ablaufen.

## Patentansprüche

1. Verfahren zur Herstellung von keramischen Grünkörpern aus einem giessfähigen, wässrigen Schlicker, dadurch gekennzeichnet, dass dem Schlicker ein Wirkstoff beigegeben wird, der den Ladungszustand des Schlickers bis zur Verfestigung des Schlickers verändert.

2. Verfahren nach Ansprüch 1, dadurch gekennzeichnet, dass ein sich im Schlicker zersetzender Wirkstoff beigegeben wird, wobei dessen Zersetzungsprodukte den Ladungszustand des Schlickers bis zur Verfestigung des Schlickers verändern.

3. Verfahren nach Anspruch 2, dadurch gekennzeichnet, dass ein die Verfestigung bestimmender pH-Wert des Schlickers aus dem sauren Bereich des Schlickers zum isoelektrischen Punkt (IEP) verschoben wird.

4. Verfahren nach Ansprüch 2, dadurch gekennzeichnet, dass der PH-Wert aus dem basischen Bereich verschoben wird.

5. Verfahren nach einem der Ansprüche 1 bis 1, dadurch gekennzeichnet, dass dem Schlicker ein sich im Schlicker selbst zersetzender Wirkstoff in Form organischer Moleküle beigemischt wird.

6. Verfahren nach einem der Ansprüche 1 bis 4, dadurch gekennzeichnet, dass dem Schlicker ein aus einem Substrat und einem Enzym gebildeter Stoff zugemischt wird.

7. Verfahren nach Anspruch 6, dadurh gekennzeichnet, dass dem Schlicker Substrat und Enyzm getrennt beigegeben werden.

8. Verfahren nach Anspruch 6 oder 7, dadurch gekennzeichnet, dass als Substrat Harnstoff, Carbonsäureester, bespielsweise Ester der Essigsäure, abbaubare Kohlehydrate, Ester des Glyzerins, Carbonsäureamide einzeln oder in Mischung beigegeben werden.

9. Verfahren nach einem der Ansprüche 6 bis 8, dadurch gekennzeichnet, dass als Enzym Hydrolasen z,.B. Urease, Carboxyl-Esterase, Acetytesterase, Pektinesterase, Acylase, Lipasen (z.B. TracylglycerolLipase) oder Oxydasen, z.B. Glukoseoxydase beigegeben werden.

10. Verfahren nach Anspruch 5, dadurch gekennzeichnet, dass als Wirkstoff ein selbstzersetzlicher Wirkstoff, beispielsweise Glycerintriester oder Glycerindiester oder Gluconsäurelacton beigegeben wird.

11. Verfahren nach einem der Ansprüche 1 bis 10, dadurch gekennzeichnet, dass dem Schlicker ein Wirkstoff beigegeben wird, der den Ladungszustand des Schlickers und die Viskosität eines dem Schlicker zugemischten Polymers oder Kolloids bis zur Verfestigung des Schlicker-Polymer- oder Schlicker-Kolloid-Gemisches verändert.

12. Verfahren nach Anspruch 11, dadurch gekennzeichnet, dass dem Schlicker als Polymer eine Polyacrylat-Emulsion zugegeben wird.

13. Verfahren nach Anspruch 11, dadurch gekennzeichnet, dass dem Schlicker als Polymer Biopolymer-Lösungen (z.B. Carrageenan als eine Lösung) zugegeben wird.

14. Verfahren nach Anspruch 11, dadurch gekennzeichnet, dass dem Schlicker als Kolloid eine koagulierende Sole (z.B. SiO2-SOL) zugemischt wird.

15. Verfahren nach Anspruch 11, dadurch gekennzeichnet, dass dem Schlicker als Kolloid ein durch Eigenhydrolyse, d.h. durch Hydrolyse der Esterbifidung, sich verfestigendes Polymer zugegeben wird.

16. Verfahren nach Anspruch 11, dadurch gekennzeichnet, dass dem Schlicker als Kolloid ein durch Hydrolyse der Esterbindung sich verfestigendes Polymer zugegeben wird, wobei zur Beschleunigung der Hydrolyse Enzyme (Esterasen) zugesetzt werden.

17. Verfahren nach Anspruch 1, dadurch gekennzeichnet, dass als Wirkstoff ein organischer Verflüssiger und ein den organischen Verflüssiger abbauendes Reagens beigemischt wird.

18. Verfahren nach Anspruch 17, dadurch gekennzeichnet, dass als organischer Verfliissiger 2,3,4- Trihydroxybenzoesäure beigegeben wird.

19. Verfahren nach Anspruch 17 oder 18, dadurch gekennzeichnet, dass als Reagens Wasserstoffperoxid beigegeben wird.

20. Verfahren nach Anspruch 1, dadurch gekennzeichnet, dass als Wirkstoff ein organischer Verflüssiger und ein den organischen Verflüssiger abbauendes Enzym beigemischt werden.

21. Verfahren nach Anspruch 20, dadurch gekennzeichnet, dass als organischer Verflüssiger 4,5 Dihydroxy-1,3-Benzoldisulfonsäure beigegeben wird.

22. Verfahren nach Anspruch 20 oder 21, dadurch gekennzeichnet, dass als Enzym Catecholoxidase beigemischt wird.

23. Verfahren nach Anspruch 1, dadurch gekennzeichnet, dass als Wirkstoff organische, nicht als Verflüssiger wirkende Moleküle zugegeben werden, die durch Umsetzung mit Enzymen zu wirksamen Verflüssigern veränderbar sind.

24. Verfahren nach Anspruch 23, dadurch gekennzeichnet, dass als Wirkstoffe Derivate der Acetylsalicylsäure oder Vorstufen der Weinsäure beigegeben werden.

25. Verfahren nach Anspruch 23 oder 24, dadurch gekennzeichnet, dass als Enzym Arylester-Hydrolase beigegeben wird.

## Claims

1. A process for the production of ceramic green parts from a castable, aqueous slip, characterized thereby that an active substance is added to the slip which changes the surface charge of slip particles leading to solidification of the slip.

2. A process according to claim 1, characterized thereby that a spontaneously decomposing active substance is added to the slip, and where the resulting decomposition products change the surface charge of the slip particles leading to solidification of the slip.

3. A process according to claim 2, characterized thereby that the pH of the slip, which determines the solidification, is shifted from the acidic region to the isoelectric point (IEP).

4. A process according to claim 2, characterized thereby that the pH of the slip is shifted from the alkaline region to the IEP.

5. A process according to one of the claims 1 to 4, characterized thereby that a spontaneously decomposing active substance is added in the form of organic molecules.

6. A process according to one of the claims 1 to 4, characterized thereby that a mixture of an active substance (substrate) and an enzyme is added to the slip.

7. A process according to claim 6, characterized thereby that the substrate and enzyme are added separately to the slip.

8. A process according to claims 6 or 7, characterized thereby that as a substrate urea, carboxylic acid esters, e.g. esters of acetic acid, decomposable carbohydrates, esters of glycerine, or carboxylic acid amides are added separately or in mixtures.

9. A process according to one of the claims 6 to 8, characterizerd thereby that as enzymes hydrolases, e.g. urease, carboxylesterase, acetylesterase, pectinesterase, acylase, lipase (e.g. Triacylglycerol-lipase) or oxydases, e.g. glucose oxidase, are added to the slip.

10. A process according to claim 5, characterized thereby that as a spontaneously decomposing active substance, for instance glyceroltriesters or glyceroldiesters, e.g. glyceryltriacetate or glyceryldiacetate, or gluconic acid lactone, are added to the slip.

11. A process according to one of the claims 1 to 10, characterized thereby that a spontaneously decomposing active substance is added to the slip, where the resulting decomposition products change the surface charge and the viscosity of the slip by addition of polymers or colloids leading to solidification of the slip/polymeror slip/colloid mixture.

12. A process according to claim 11, characterized thereby that as a polymer a polyacrylate emulsion is added to the slip.

13. A process according to claim 11, characterized thereby that as a polymer biopolymer solutions (e.g. carrageenan) are added to the slip.

14. A process according to claim 11, characterized thereby that as a colloid a coagulating sol (e.g. SiO2-sol) is added to the slip.

15. A process according to claim 11, characterized thereby that as a polymer by self hydrolysis solidifying polymers with ester bonds are added to the slip.

16. A process according to claim 11, characterized thereby that as a polymer by self hydrolysis solidifying polymers with ester bonds are added to the slip, and increasing the hydrolysis rate by adding enzymes (esterase).

17. A process according to claim 1, characterized thereby that as an active substance an organic deflocculant and a deflocculant decomposing reagent is added to the slip.

18. A process according to claim 17, characterized thereby that as an organic deflocculant 2, 3, 4-trihydroxybenzoic acid is added.

19. A process according to claim 17 or 18, characterized thereby that as reagent hydrogen peroxide is added.

20. A process according to claim 1, characterized thereby that as an active substance an organic deflocculant and a deflocculant decomposing enzyme is added.

21. A process according to claim 20, characterized thereby that as an organic deflocculant 4,5-dihydroxy-1,3-benzenedisulfonic acid is added to the slip.

22. A process according to claim 20 or 21, characterized thereby that as an enzyme catechol oxidase is added.

23. A process according to claim 1, characterized thereby that as an active substance organic, non-deflocculating molecules are added, which react with enzymes to efficient deflocculants.

24. A process according to claim 23, characterized thereby that as active substances derivates of acetylsalicylic acid or precursors of citric acid are added.

25. A process according to claim 23 or 24, characterized thereby that as an enzyme arylesterhydrolase is added.

## Revendications

1. Procédé pour la fabrication d'ébauches céramiques crues à partir d'une barbotine coulable et aqueuse, caractérisé en ce qu'on ajoute à la barbotine un agent actif qui modifie l'état de charge de la barbotine jusqu'à la solidification de la barbotine.

2. Procédé selon la revendication 1, caractérisé en ce qu'on ajoute un agent actif se décomposant dans la barbotine, les produits de décomposition modifiant l'état de charge de la barbotine jusqu'à la solidification de la barbotine.

3. Procédé selon la revendication 2, caractérisé en ce qu'un pH de la barbotine qui détermine la solidification est déplacé de la plage acide de la barbotine vers le point isoélectrique (IEP).

4. Procédé selon la revendication 2, caractérisé en ce que le pH est déplacé à partir de la plage basique.

5. Procédé selon l'une quelconque des revendications 1 à 4, caractérisé en ce qu'on additionne à la barbotine un agent actif qui se décompose tout seul dans la barbotine et se présente sous la forme de molécules organiques.

6. Procédé selon l'une quelconque des revendications 1 à 4, caractérisé en ce qu'on ajoute à la barbotine un agent constitué d'un substrat et d'un enzyme.

7. Procédé selon la revendication 6, caractérisé en ce qu'on additionne séparément le substrat et l'enzyme à la barbotine.

8. Procédé selon la revendication 6 ou 7, caractérisée en ce qu'on ajoute comme substrat de l'urée, de l'ester d'acide carboxylique, par exemple ester d'acide acétique, des hydrates de carbone dégradables, de l'ester de glycérine, des amides d'acide carboxylique individuellement ou en mélange.

9. Procédé selon l'une quelconque des revendications 6 à 8, caractérisé en ce qu'on ajoute comme enzyme des hydrolases, par exemple uréase, estérase de carboxyle, acétylestérase, stérase de pectine, acylase, lipases (par exemple lipase de tracylglycérol) ou oxydases, par exemple oxydase de glucose.

10. Procédé selon la revendication 5, caractérisé en ce qu'on ajoute comme agent actif un agent actif autodécomposable, par exemple triester de glycérine ou diester de glycérine ou lactone d'acide gluconique.

11. Procédé selon l'une quelconque des revendications 1 à 10, caractérisé en ce qu'on ajoute à la barbotine un agent actif qui modifie l'état de charge de la barbotine et la viscosité d'un polymère ou colloïde ajouté à la barbotine jusqu'à la solidification du mélange barbotine-polymère ou barbotine-colloïde.

12. Procédé selon la revendication 11, caractérisé en ce qu'on ajoute à la barbotine comme polymère une émulsion de polyacrylate.

13. Procédé selon la revendication 11, caractérisé en ce qu'on ajoute à la barbotine comme polymère des solutions biopolymères (par exemple carragaheenane sous la forme d'une solution).

14. Procédé selon la revendication 11, caractérisé en ce qu'on ajoute à la barbotine comme colloïde une saumure coagulante (par exemple sol SiO2).

15. Procédé selon la revendication 11, caractérisé en ce qu'on ajoute à la barbotine comme colloïde un polymère qui se solidifie par une hydrolyse propre, c'est à dire par hydrolyse de l'estérification.

16. Procédé selon la revendication 11, caractérisé en ce qu'on ajoute à la barbotine comme colloïde un polymère qui se solidifie par hydrolyse de l'estérification, des enzymes (estérases) étant ajoutés pour l'accélération de l'hydrolyse.

17. Procédé selon la revendication 1, caractérisé en ce qu'on additionne comme agent actif un fluidifiant organique et un réactif qui décompose le fluidifiant organique.

18. Procédé selon la revendication 17, caractérisé en ce qu'on ajoute comme fluidifiant organique de l'acide trihydroxybenzoïque 2,3,4.

19. Procédé selon la revendication 17 ou 18, caractérisé en ce qu'on ajoute comme réactif du peroxyde d'hydrogène.

20. Procédé selon la revendication 1, caractérisé en ce qu'on additionne comme agent actif un fluidifiant organique et un enzyme qui décompose le fluidifiant organique.

21. Procédé selon la revendication 20, caractérisé en ce qu'on ajoute comme fluidifiant organique du 4,5 bihydroxy-1,3 benzène bisulfonique.

22. Procédé selon la revendication 20 ou 21, caractérisé en ce qu'on additionne comme enzyme du catécholoxidase.

23. Procédé selon la revendication 1, caractérisé en ce qu'on ajoute comme agent actif des molécules organiques qui n'agissent pas comme fluidifiants et peuvent être modifiés par transformation avec des enzymes en fluidifiants efficaces.

24. Procédé selon la revendication 23, caractérisé en ce qu'on additionne comme agents actifs des dérivés de l'acide acétylsalicilique ou des stades antérieurs de l'acide tartrique.

25. Procédé selon la revendication 23 ou 24, caractérisé en ce qu'on ajoute comme enzyme de l'hydrolase d'ester d'aryle.
